# EUROPEAN PATENT SPECIFICATION

(11) **EP 0 655 723 B1**
(45) Date of publication and mention of the grant of the patent: **22.07.1998**
(21) Application number: 94118421.0
(22) Date of filing: 23.11.1994
(51) Int. Cl.: G09G 3/34

(54) **Digital memory for display system using spatial light modulator**
Digitaler Speicher für ein Anzeigesystem mit räumlichem Lichtmodulator
Mémoire numérique pour système d'affichage utilisant un modulateur spatial de lumière

(30) Priority: 30.11.1993 US 160344
(43) Date of publication of application: 31.05.1995
(73) Proprietor: TEXAS INSTRUMENTS INCORPORATED, Dallas Texas 75265 (US)
(72) Inventor: Gove, Robert J., Plano, TX 75075 (US); Urbanus, Paul M., Dallas, TX 75248 (US); Sampsell, Jeffrey B., Plano, TX 75074 (US); Doherty, Donald B., Irving, TX 75038 (US); Hashimoto, Masashi, Tsukuba-shi, Ibaraki-ken (JP)
(74) Representative: Schwepfinger, Karl-Heinz, Dipl.-Ing.

(56) References cited:
- EP-A- 0 507 270
- EP-A- 0 530 761

## Description

### TECHNICAL FIELD OF THE INVENTION

This invention relates to image display systems, and more particularly to a digital memory for a display system that processes image data and uses a spatial light modulator to display real-time images.

### BACKGROUND OF THE INVENTION

Real-time display systems based on spatial light modulators (SLMs) are increasingly being used as an alternative to display systems using cathode ray tubes (CRTs). SLM systems provide high resolution displays without requiring the digital data to be converted to analog form prior to display as is the case with a CRT system.

Deformable mirror devices (DMDs) are a type of SLM, and may be used in projection display applications. A DMD has an array of micro-mechanical mirror elements, each individually addressable by electronic data. Depending on the state of its addressing signal, each mirror element is moved so that it either does or does not reflect light to the image plane. Other SLMs operate on similar principles, with pixel elements that emit or reflect light simultaneously with other pixel elements, such that a complete image frame is generated by addressing pixel elements rather than by scanning them.

For processing data in an SLM-based system, as is the case with other digital image processing systems, the processor operates on pixel data. Interlaced data is arranged pixel-by-pixel, row-by-row, and field-by-field. Scan conversion techniques are applied to generate frames from fields. Non-interlaced data is already arranged as frames. Processing tasks such as colorspace conversion and scaling, as well as scan conversion, are performed on the pixel data.

However, in an SLM-based system, prior to display, the data must be arranged in "bit-planes". In other words, bit-level data must be delivered to the SLM so that each pixel element can be "on" or "off' a length of time corresponding to the value of its pixel data. A bit-plane represents all bits of all pixels having the same digital weight. For pixels having an n-bit resolution, there are n bit-planes per image frame.

Because of these different data formats, existing SLM systems use separate memories for providing pixel data to be processed and for providing bit-plane data to the SLM. For accomplishing digital processing tasks, a first memory supplies pixel data to a processor. A second memory delivers bit-plane data to the SLM.

### SUMMARY OF THE INVENTION

According to one aspect of the present invention, there is provided a memory for use in a digital display system having a processor for performing image processing and having a spatial light modulator (SLM) for generating an image according to image data, comprising: a memory array for storing image data, said array having a capacity of at least the bit-size of two image frames; a plurality of first registers for receiving pixel data for storage in said memory array; a plurality of second registers for transferring pixel data from said memory array to said processor; a plurality of third registers for transferring data from said memory array to said SLM after said pixel data has been processed; a bit selector for controlling said third registers such that said third registers deliver data to said SLM; and control means for controlling the addressing and timing of reading to and writing from said memory array via said registers.

According to a second aspect of the present invention, there is provided a method of storing and processing data in a digital image system having a processor for performing image processing and having a spatial light modulator (SLM) for generating an image according to image data, comprising the steps of: using first registers to receive pixel data; storing said pixel data before said processing step; using second registers to deliver said pixel data from said memory array to a processor; processing said pixel data; using said first registers to receive said pixel data after processing; storing said pixel data after processing; selecting bits of said pixel data to format said data into image data; and using third registers to deliver said image data to an SLM.

According to a third aspect of the present invention, there is provided a processing system for use in a digital display system having a spatial light modulator (SLM) that generates an image according to image data, comprising: a field buffer for delivering pixel data to a memory; a processor for receiving said pixel data from said memory and for processing said pixel data such that it is ready for display by said SLM; a memory having a memory array for storing image data, said array having a capacity of at least the bit-size of two image frames, a plurality of first registers for receiving pixel data for storage in said memory array, a plurality of second registers for transferring pixel data from said memory array to said processor for processing, a plurality of third registers for transferring data from said memory array to said SLM after said pixel data has been processed, a bit selector for controlling said third registers such that said third registers deliver image data to said SLM; a memory input control means for controlling when said memory receives data from said field buffer and when said memory receives data from said processor; and a spatial light modulator for receiving said image data and generating a display.

A technical advantage of the invention is that the same memory can be used to provide pixel data to a processor as is used to deliver bit-plane data to the SLM. The chip count and pin count of digital components are reduced, resulting in reduced cost of an SLM-based projection system.

### BRIEF DESCRIPTION OF THE DRAWINGS

Figures 1 and 1A are block diagrams of a SLM-based display system, having a memory in accordance with the invention.

Figure 2 illustrates the processor and memory of Figure 1 in further detail.

Figure 3 illustrates a portion of the memory.

Figure 4 illustrates the steps of a method of using the memory for storing both processor-bound and SLM-bound data.

Figures 5 and 6 illustrate the ordering of data stored in the registers of Figure 3.

Figure 7 illustrates how images for special features, such as picture-in-picture, are read to memory.

Figure 8 illustrates a modification of the memory of Figure 3 for implementing special features.

### DETAILED DESCRIPTION OF THE INVENTION

A comprehensive description of a DMD-based digital television system is set out in U.S. Patent No. 5,079,544, entitled, "Standard Independent Digitized Video System", and in U.S. Patent Serial No. 08/147,249 (Attorney Docket No. TI-17855), entitled "DMD Display System", both assigned to Texas Instruments Incorporated.

U.S. Patent Serial No. 07/678,761, published as EP-A-0 507 270, entitled "DMD Architecture and Timing for Use in a Pulse-Width Modulated Display System" (Attorney Docket No. TI-15721), describes a type of DMD-based display system. It also describes a method of formatting video data for use with such a system, and a method of modulating bit-planes to provide varying pixel brightness. The general use of a DMD-based projection system with a color wheel to provide sequential color images is described in U.S. Patent Serial No. 07/809,816, published as EP-A-0 547 603 entitled "White Light Enhanced Color Field Sequential Projection" (Attorney Docket No. TI-16573).

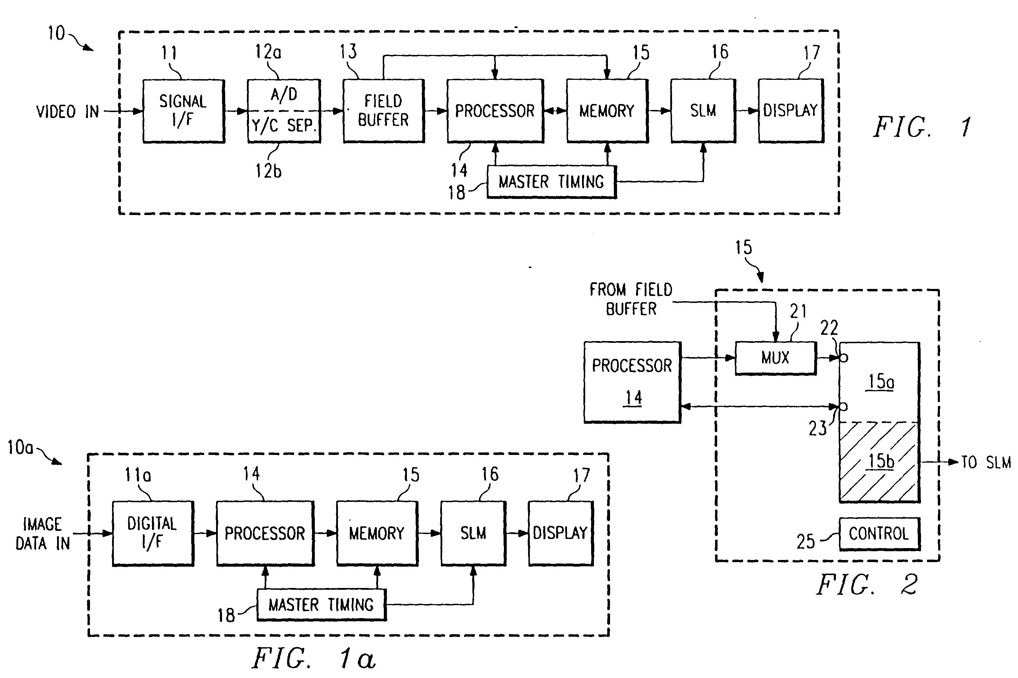

Figure 1 is a block diagram of a SLM-based display system 10, which provides color images from pixel data sampled from a video signal. Although the following description is in terms of a receiver for a broadcast television signal, it should be understood that receiver 10 could be any type of equipment for receiving an analog composite video signal and displaying images represented by the signal. Figure 1A is a block diagram of a similar system 10a, in which the image data input signal already represents digital data. Both types of systems 10 and 10a are referred to herein as a "digital display system". In both Figures 1 and 1A, only those components significant to pixel processing and bit-plane conversion are shown. Other components, such as those used for processing synchronization and audio signals, are not shown.

The invention, which involves various aspects of memory 15, is useful with either type of system 10 or 10a. A common characteristic of both system 10 and system 10a is that memory 15 provides data to processor 14 for processing as well as to SLM 16 for display. In other words, memory 15 integrates the functions of a pixel processing store and a bit-plane conversion store. Thus, only one memory device need be used in system 10 or 10a.

For purposes of example, the description herein is directed to system 10a, and it is assumed that the processing task to be performed by processor 14 is converting interlaced fields into frames. Various de-interlacing algorithms exist, such as line doubling, line averaging, median filtering, and motion adaptation. A characteristic of typical de-interlacing algorithms is that processor 14 combines pixel data from different rows, whether of the same field or of temporally adjacent fields. Examples of other processing tasks that system 10 or system 10a is likely to perform are scaling, colorspace conversion, and picture quality control. For each of these tasks, processor 14 operates on pixel data. Any of these tasks could be performed by moving pixel data back and forth between processor 14 and memory 15 in the manner described herein and executing appropriate computer processes.

For purposes of example, an image having 768 pixels per row, 576 rows per frame, and 8 bits per pixel is assumed. For 8-bit pixels, the bit-length of a row is 8 x 768, or 6144 bits. In practice, a more typical pixel size is 24 bits, with 8 bits for each of three colors. The primary effect of different frame and pixel sizes would be differences in the memory sizes described herein.

As an overview of system 10, signal interface unit 11 receives an analog video signal and separates video synchronization and audio signals. It delivers the video signal to A/D converter 12a and Y/C separator 12b, which convert it into a digital video signal and perform luminance/chrominance separation, respectively. Although the receiver 10 of Figure 1 performs A/D conversion before Y/C separation, the order of these tasks could be reversed for analog rather than digital Y/C separation.

A field buffer 13 is interposed between Y/C separator 12b and processor 14. This field buffer 13 is useful for field spreading. Because the SLM-based systems 10 and 10a do not require vertical blanking time, the extra time between fields may be used to increase the time available for processing data and loading bit-planes to the SLM 16. Field buffer 13 may have other functions related to color wheel synchronization and scaling. As indicated in Figure 1, for some tasks, such as motion adaptive de-interlacing, data might be delivered directly from field buffer 13 to processor 14 instead of being first written to memory 15. Processor 14 prepares the data for display, by performing various processing tasks. As stated above, processor 14 operates on pixel data.

Memory 15 receives pixel data from field buffer 13. At an appropriate time, memory 15 then delivers pixel data to processor 14 for processing. After processing, memory 15 again receives the pixel data. As stated above, transfer of data between memory 15 and processor 14 may be repeated for a number of different processing tasks. After all processing, the data is "fully processed" in the sense that it is ready for delivery to SLM 16. After each frame of fully processed data is stored, memory 15 delivers bit-planes of that frame to SLM 16. Special features of memory 14 for accomplishing both pixel data and bit-plane output are described below in connection with Figures 2 - 4.

SLM 16 may be any type of SLM. Although this description is in terms of a DMD type of SLM, other types of SLMs could be substituted into system 10 or 10a and used for the method described herein. For example, SLM 16 could be an LCD-type SLM. Details of a suitable DMD can be found in U.S. Patent No. 4,956,619, entitled "Spatial Light Modulator".

Display unit 17 receives the image from SLM 16, and provides a display image to an image plane such as a display screen. If the system 10 or 10a handles color data, display unit 17 may include a color wheel, which rotates such that each bit-plane is transmitted through a corresponding color filter. Master timing unit 18 provides various system control functions.

Figure 2 illustrates processor 14 and memory 15 in further detail. As indicated, memory 15 is a double-buffer memory in the sense that it has a capacity of at least two image frames. During one frame period, typically 1/60 second, a first area 15a stores up to one frame of data available for processing. During the same frame period, a second area 15b stores a frame of data being loaded to SLM 16. At the end of the frame period, area 15a is filled with a frame of data to be delivered to SLM 16, and area 15b is empty because its data has been loaded. The two areas 15a and 15b are "ping-pong" controlled, each frame period. After area 15b has delivered its data to SLM 16, it becomes the area for providing data to processor 14. At the same time, area 15a, now filled with fully processed data, becomes the area that delivers data to SLM 16.

As stated above, memory 15 receives pixel data from two different sources. Sometimes it receives pixel data from field buffer 13. At other times, it receives pixel data from processor 14. Depending on a timing function that controls which source is to currently deliver data to memory 15, multiplexer 21 directs the appropriate data to a write port 22 of memory 15. Memory 15 also has a read port 23 for delivering data to processor 14. These ports 22 and 23 may operate concurrently, such that pixel data may be written in while different pixel data is being read out.

Control unit 25 receives timing signals from master timing unit 18 and address signals from processor 14. The data rates required for real-time image display on DMD-based projection systems are the subject of various other patent applications, such as U.S. Serial No. 07/678,761. For addressing, control unit 25 includes an address decoder for row-random access. That is, any row of data may be accessed independently. For example, when a field of interlaced pixel data is written in, odd lines or even lines only may be written. Address and control lines (not shown) are used to determine which row is accessed.

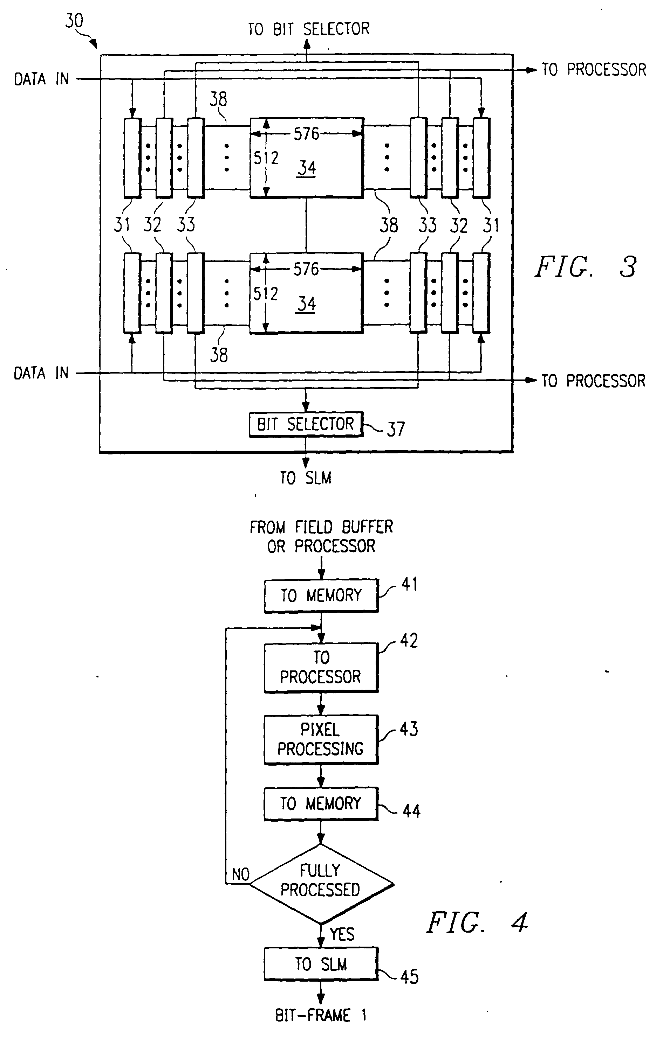

Figure 3 illustrates a portion of memory 15, identified as a memory unit 30. In this example, each memory unit 30 has a capacity of 1/6 frame of pixel data. Thus, six memory units 30 are required to store each frame of data.

Each unit 30 has two memory arrays 34. Each array 34 has a capacity of 512 x 576 bits. This size corresponds to the size of 1/12 of an image frame, and to the ability of each of the six units 30 to store 1/6 of an image frame. The 512 bit "height" of arrays 34 accommodates the 6144-bit length of each row. (512 x 12 = 6144 = 8 x 768). Their 576-bit "width" corresponds to the number of rows in a frame. It should be understood that the division of memory 15 into arrays 34 is a matter of control means and available memory sizes. Conceptually, memory 15 could be a single array having a capacity of at least two image frames. For double buffering, the array(s) assigned to each area 15a and 15b could share registers 31 - 33 and bit selector 37. Alternatively, a second set of six memory units 30 could be used for each area 15a and 15b.

Each unit 30 also has three types of registers: input registers 31 for receiving pixel data from processor 14, processor-bound output registers 32 for delivering pixel data to processor 14, and SLM-bound output registers 33 for delivering bit-plane data to SLM 16.

Registers 31 - 33 are 256-bit registers, which corresponds to the size of 32 8-bit pixels. It should be understood that the size of registers 31 - 33 is related to the size of the image frames. That is, if the image has a length of 8 x 768 bits per row, and registers 31 - 33 are 256-bit registers, a total of 24 registers are required to store an entire row of 6144 bits. If an image frame had a different number of rows or pixels per row, the size of registers 31 - 33 or of arrays 34 could be adjusted accordingly. Likewise, the number of registers of each type 31 - 33 in each unit 30 is related to their size and the size of the arrays 34. If, for example, each unit 30 had only two 256-bit registers of each type, smaller arrays 34 and twice as many memory units 30 would be used.

Each memory unit 30 has four of each type of register 31 - 33, two for each array 34. Thus, where each unit 30 stores 1/6 frame, a total of 24 of each type of register 31 - 33 are used for each frame. Each array 34 is written to and read from via two registers of each type 31 - 33. This is another feature that enhances data rates because top rows can be written out while bottom rows are read in. Parallel data lines 38 carry the data from or to registers 31 - 33 in accordance with control signals delivered from control unit 25.

Figure 4 illustrates the basic steps of using memory 15 in accordance with the invention. In step 41, pixel data is written to memory 15 via input registers 31. After each row is read to registers 31, that row it is transferred to arrays 34. In step 42, which occurs after a sufficient amount of data is stored, typically at least a field, pixel data is read from memory 15 to processor 14, via registers 32. In step 43, processor 14 operates on the data, such as by performing a de-interlacing algorithm that creates frame data. In step 44, the processed data is written to memory 15 via registers 31, in the same manner as for step 41. If there is further processing to be performed, steps 42 - 44 are repeated. When the data is fully processed, it is ready for delivery to SLM 16 via registers 33. In step 45, which occurs after at least one frame is stored, bit-planes are read from memory 15 to SLM 16 via registers 33.

For reading data from memory 15 to SLM 16, registers 33 are controlled so that the data is received by SLM 16 in bit-plane format. Various embodiments of memory 15 may be used to accomplish this "format on output" function. In the embodiment of Figure 3, like registers 31 and 32, each 256-bit register 33 stores 8 bits for each of 32 pixels. However, for bit-plane format, a bit selector 37 in communication with each register 33, selects every 8th bit of each pixel. Bit selection in this manner selects bits 0, 8, 16, ....248 from each register 33. The result is a bit-plane of bit 0 of each pixel. Bit selector 37 then increments one bit position to read a next bit-plane of bit 1 of each pixel. This process continues for all bit-planes of the image. In general, for n-bit pixels, every nth bit is selected for n bit-planes.

As an alternative to having a 256-bit capacity, registers 33 could have a 16-bit capacity. In this case, bit selector 37 would be placed at the input to registers 33, such that every 8th bit is loaded to registers 33. There are a number of techniques that could be used for formatting the data into bit-planes, but an important characteristic is that each method involves use of output registers 33 that are dedicated to delivering data to the SLM 14 and some sort of bit selector 37 at the input or output of registers 33.

Typically, the loading of data into registers 31 - 33 will occur concurrently. Thus, as a row from one field is written to registers 31, a prior row can be written to registers 32 for delivery to processor 14, and a processing row can be written to registers 33 for delivery to SLM 14.

### Special Features

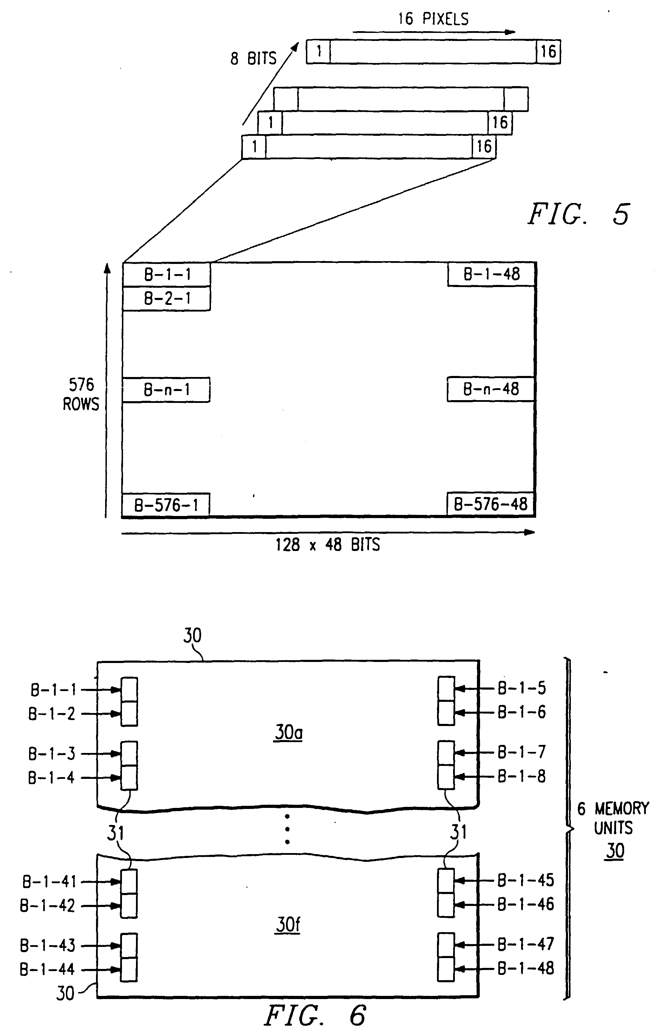

Figures 5 and 6 illustrate the image data in the form that it is stored in registers 31 - 33. As stated above, an image having 576 rows of data and 768 pixels per row is assumed. Each pixel is represented by 8 bits of data.

Each row of image data is stored as a set of blocks, each block designated as "B - row number - block number". Where a row of data is 768 pixels, each block is comprised of data for 16 pixels. Thus, each block has a size of 128 bits. Each 256-bit register 31 - 33 stores two blocks of row data in serial form.

Because each memory unit 30 has four registers of each type 31 - 33, each memory unit 30 receives eight blocks of data. Thus, six memory units 30 store the 48 blocks of data that comprise each row.

A feature of many digital television systems is the ability to display a "picture-in-picture" (PIP), which is a small frame, usually of a decimated image from a different signal, within the main image frame. The data for the two frames are not necessarily in phase, and some means must be provided so that the larger image does not overwrite the area reserved for the small image.

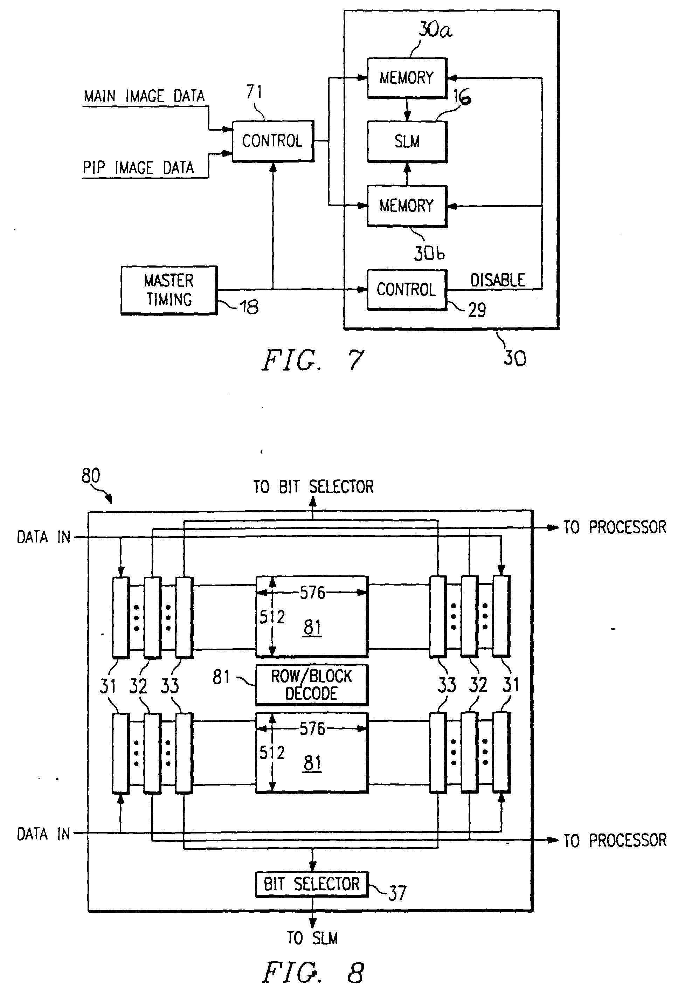

Figures 7 and 8 illustrate how memory 15 may be modified for special features, such as PIP. The data for the special image, here a PIP, is generated using conventional A/D conversion and decimated image generation techniques. A PIP control unit 71 controls when a PIP image is to be displayed. If the PIP is "on", control unit 71 selects a predetermined subset of input registers 31 of the same or of different memory units 30. These are the input registers 31 that will receive the PIP image. For example, block B-550-44 to block B-576-48 of one memory unit 30 could be selected. The result is a PIP frame in the lower right corner of the display that is four blocks wide and 26 rows high. For a special image that is wider than eight blocks, the registers 31 of more than one memory unit 30 would be used.

Figure 8 illustrates a modification of the memory unit 30, designated as memory unit 80, which is used to implement special images, such as PIP. It is like memory unit 30, except that it is block-random rather than row-random. A row/block decoder 81 permits data to be written and read to selected blocks of memory 15.

During the reading of pixel data for the main image to memory 15, control unit 29 deselects the registers 31 that are being used for the PIP, so that the main frame is not written to registers 31 reserved for the PIP image. Also, registers 32 are disabled so that the PIP image data is not delivered to processor 12 for scan conversion processing.

The control circuit of Figure 7 and the block random access memory 80 of Figure 8 could be used for other digital display features, such as on-screen display or closed captioning. The registers 31 corresponding to whatever area on the display screen is reserved for display of special features are controlled so that the special image is loaded to the appropriate registers 31 and not overwritten by the main image.

### Other Embodiments

Although the invention has been described with reference to specific embodiments, this description is not meant to be construed in a limiting sense. Various modifications of the disclosed embodiments, as well as alternative embodiments, will be apparent to persons skilled in the art. The scope of the invention being defined in the claims.

## Claims

1. A memory for use in a display system having a processor (14) for performing image processing and having a spatial light modulator (SLM) (16) for generating an image according to image data, comprising:
a memory array (15, 30, 80) for storing image data, said array having a capacity of at least the bit-size of two image frames;
a plurality of first registers (31) for receiving pixel data for storage in said memory array;
a plurality of second registers (32) for transferring pixel data from said memory array to said processor;
a plurality of third registers (33) for transferring data from said memory array to said SLM after said pixel data has been processed;
a bit selector (37) for controlling said third registers such that said third registers deliver data to said SLM; and
control means (25) for controlling the addressing and timing of reading to and writing from said memory array via said registers.

2. The memory of Claim 1, wherein each plurality of said first registers (31), said second registers (32), and said third registers (33) has a capacity of at least the bit-size of a row of a frame of image data.

3. The memory of Claim 1, wherein each plurality of said first registers (31) and said second registers (32) has a capacity of at least the bit-size of a row of a frame of image data, and wherein said plurality of third registers (33) has a capacity of at least the bit-size of a row of a bit-plane of image data.

4. The memory of any preceding Claim, wherein said bit selector (37) selects bits on output from said third registers (33).

5. The memory of any of Claims 1 to 3, wherein said bit selector (37) selects bits on input to said third registers (33).

6. The memory of any preceding Claim, wherein said control means (25) provides row random access to said memory array.

7. The memory of any preceding Claim, further comprising a block selection means (81) for accessing predetermined portions of rows of said memory array, and wherein said control means has means for disabling a predetermined subset of first registers such that they do not receive pixel data.

8. The memory of any preceding Claim, further comprising memory input control means for controlling when said first registers (31) receive pixel data from a field buffer (13) and when said first registers (31) receive pixel data from said processor (14).

9. The memory of any preceding Claim, further comprising a special feature image control means (71) for controlling when said memory stores a special feature image.

10. The memory of any preceding Claim, wherein the first registers (31) are input registers, the second registers (32) are processor-bound output registers and the third registers (33) are SLM-bound output registers.

11. A method of storing and processing data in a digital image system having a processor (14) for performing image processing and having a spatial light modulator (SLM) (16) for generating an image according to image data, comprising the steps of:
using first registers (31) to receive pixel data;
storing said pixel data before processing said pixel data;
using second registers (32) to deliver said pixel data from said memory array to said processor (14);
processing said pixel data;
using said first registers (31) to receive said pixel data after processing;
storing said pixel data after processing;
selecting bits of said pixel data to format said data into image data; and
using third registers (33) to deliver said image data to said SLM (16).

12. The method of Claim 11, wherein said step of using third registers (33) is accomplished by selecting bits of the same binary weight on output from said third registers.

13. The method of Claim 11, wherein said step of using third registers (33) is preceded by the step of selecting bits of the same binary weight on input into said third registers.

14. The method of any of Claims 11 to 13, wherein said step of using said processor (14) includes performing a scan conversion algorithm.

15. The method of any of Claims 11 to 14, wherein said step of using said processor (14) includes performing a pixel scaling algorithm.

16. The method of any of Claims 11 to 15, wherein said step of using said processor (14) includes performing a color conversion algorithm.

17. A processing system for use in a digital display system having a spatial light modulator (SLM) (16) that generates an image according to image data, comprising:
a field buffer (13) for delivering pixel data to a memory (15, 30, 80);
a processor (14) for receiving said pixel data from said memory and for processing said pixel data such that it is ready for display by said SLM;
a memory (15, 30, 80) having a memory array for storing image data, said array having a capacity of at least the bit-size of two image frames, a plurality of first registers (31) for receiving pixel data for storage in said memory array, a plurality of second registers (32) for transferring pixel data from said memory array to said processor for processing, a plurality of third registers (33) for transferring data from said memory array to said SLM after said pixel data has been processed, a bit selector for controlling said third registers such that said third registers deliver image data to said SLM;
control means (25) for controlling the addressing and timing of reading to and writing from said memory array via said registers;
a memory input control means for controlling when said memory receives data from said field buffer and when said memory receives data from said processor; and
a spatial light modulator (16) for receiving said image data and generating a display.

18. The processing system of Claim 17, wherein each plurality of said first registers (31), said second registers (32), and said third registers (33) has a capacity of at least the bit-size of a row of a frame of image data.

19. The processing system of Claim 17, wherein each plurality of said first registers (31) and said second registers (32) has a capacity of at least the bit-size of a row of a frame of image data, and wherein said plurality of third registers (33) has a capacity of at least the bit-size of a row of a bit-plane of image data.

20. The processing system of any of Claims 17 to 19, wherein said bit selector (37) selects bits on output from said third registers (33).

21. The processing system of any of Claims 17 to 19, wherein said bit selector (37) selects bits on input to said third registers (33).

## Patentansprüche

1. Speicher für die Verwendung in einem Anzeigesystem, das einen Prozessor (14) für die Ausführung einer Bildverarbeitung sowie einen räumlichen Lichtmodulator (SLM) (16) zum Erzeugen eines Bildes in Übereinstimmung mit Bilddaten enthält, mit:
einer Speichermatrix (15, 30, 80) zum Speichern von Bilddaten, wobei die Matrix eine Kapazität wenigstens der Bitgröße zweier Vollbilder hat;
mehreren ersten Registern (31) zum Empfangen von Pixeldaten für die Speicherung in der Speichermatrix;
mehreren zweiten Registern (32) zum Übertragen von Pixeldaten von der Speichermatrix an den Prozessor;
mehreren dritten Registern (33) zum Übertragen von Daten von der Speichermatrix an den SLM, nachdem die Pixeldaten verarbeitet worden sind;
einer Bitwähleinrichtung (37) zum Steuern der Register in der Weise, daß die dritten Register Daten an den SLM liefern; und
einer Steuereinrichtung (25) zum Steuern der Adressierung und des Zeitverlaufs des Lesens von der und des Schreibens in die Speichermatrix über die Register.

2. Speicher nach Anspruch 1, wobei sowohl die mehreren ersten Register (31) als auch die mehreren zweiten Register (32) und die mehreren dritten Register (33) jeweils eine Kapazität wenigsten der Bitgröße einer Vollbildzeile von Bilddaten hat.

3. Speicher nach Anspruch 1, wobei die mehreren ersten Register (31) und die mehreren zweiten Register (32) jeweils eine Kapazität wenigstens der Bitgröße einer Vollbildzeile von Bilddaten besitzen und wobei die mehreren dritten Register (33) eine Kapazität wenigstens der Bitgröße einer Zeile einer Bitebene von Bilddaten hat.

4. Speicher nach irgendeinem vorangehenden Anspruch, wobei die Bitwähleinrichtung (37) Bits aus dem Ausgang der dritten Register (33) wählt.

5. Speicher nach irgendeinem der Ansprüche 1 bis 3, wobei die Bitwähleinrichtung (37) Bits aus dem Eingang in die dritten Register (33) wählt.

6. Speicher nach irgendeinem vorangehenden Anspruch, wobei die Steuereinrichtung (25) einen wahlfreien Zeilenzugriff auf die Speichermatrix schafft.

7. Speicher nach irgendeinem vorangehenden Anspruch, ferner mit einer Blockwähleinrichtung (81) zum Zugreifen auf vorgegebene Abschnitte von Zeilen der Speichermatrix, wobei die Steuereinrichtung eine Einrichtung besitzt zum Sperren einer vorgegebenen Untermenge von ersten Registern, so daß sie keine Pixeldaten empfangen.

8. Speicher nach irgendeinem vorangehenden Anspruch, ferner mit einer Speichereingang-Steuereinrichtung, die steuert, wann die ersten Register (31) Pixeldaten von einem Feldpuffer (13) empfangen und wann die ersten Register (31) Pixeldaten vom Prozessor (14) empfangen.

9. Speicher nach irgendeinem vorangehenden Anspruch, ferner mit einer Steuereinrichtung (71) für Bilder mit speziellen Merkmalen, die steuert, wann der Speicher ein Bild mit speziellen Merkmalen speichert.

10. Speicher nach irgendeinem vorangehenden Anspruch, wobei die ersten Register (31) Eingangsregister sind, die zweiten Register (32) prozessorgebundene Ausgangsregister sind und die dritten Register (33) SLM-gebundene Ausgangsregister sind.

11. Verfahren zum Speichern und Verarbeiten von Daten in einem digitalen Abbildungssystem, das einen Prozessor (14) zum Ausführen einer Bildverarbeitung und einen räumlichen Lichtmodulator (SLM) (16) zum Erzeugen eines Bildes in Übereinstimmung mit Bilddaten enthält, mit den folgenden Schritten:
Verwenden erster Register (31), um Pixeldaten zu empfangen;
Speichern der Pixeldaten vor der Verarbeitung der Pixeldaten;
Verwenden zweiter Register (32), um die Pixeldaten von der Speichermatrix zum Prozessor (14) zu liefern;
Verarbeiten der Pixeldaten;
Verwenden der ersten Register (31), um die Pixeldaten nach der Verarbeitung zu empfangen;
Speichern der Pixeldaten nach der Verarbeitung;
Wählen von Bits der Pixeldaten, um die Daten in Bilddaten zu formatieren; und
Verwenden dritter Register (33), um die Bilddaten zum SLM (16) zu liefern.

12. Verfahren nach Anspruch 11, bei dem der Schritt des Verwendens dritter Register (31) durch Wählen von Bits mit demselben binären Stellenwert aus dem Ausgang von den dritten Registern ausgeführt wird.

13. Verfahren nach Anspruch 11, bei dem dem Schritt des Verwendens dritter Register (33) der Schritt des Wählens von Bits mit demselben binären Stellenwert aus dem Eingang in die dritten Register vorhergeht.

14. Verfahren nach irgendeinem der Ansprüche 11 bis 13, bei dem der Schritt des Verwendens des Prozessors (14) die Ausführung eines Abtastumsetzungsalgorithmus enthält.

15. Verfahren nach irgendeinem der Ansprüche 11 bis 14, bei dem der Schritt des Verwendens des Prozessors (14) die Ausführung eines Pixelsskalierungsalgorithmus enthält.

16. Verfahren nach irgendeinem der Ansprüche 11 bis 15, bei dem der Schritt des Verwendens des Prozessors (14) die Ausführung eines Farbumsetzungsalgorithmus enthält.

17. Verarbeitungssystem für die Verwendung in einem digitalen Anzeigesystem, das einen räumlichen Lichtmodulator (SLM) (16) enthält, der in Übereinstimmung mit Bilddaten ein Bild erzeugt, mit:
einem Feldpuffer (13) zum Liefern von Pixeldaten an einen Speicher (15, 30, 80);
einem Prozessor (14) zum Empfangen der Pixeldaten vom Speicher und zum Verarbeiten der Pixeldaten in der Weise, daß sie für die Anzeige durch den SLM bereit sind;
einem Speicher (15, 30, 80) mit einer Speichermatrix zum Speichern von Bilddaten, wobei die Matrix eine Kapazität wenigstens der Bitsgröße zweier Vollbilder hat, mehreren ersten Registern (31) zum Empfangen von Bilddaten zum Speichern in der Speichermatrix, mehreren zweiten Registern (32) zum Übertragen von Pixeldaten von der Speichermatrix an den Prozessor für die Verarbeitung, mehreren dritten Registern (33) zum Übertragen von Daten von der Speichermatrix an den SLM, nachdem die Pixeldaten verarbeitet worden sind, und einer Bitwähleinrichtung zum Steuern der dritten Register in der Weise, daß die dritten Register Bilddaten an den SLM liefern;
einer Steuereinrichtung (25) zum Steuern der Adressierung und des Zeitverlaufs des Lesens von der und des Schreibens in die Speichermatrix über die Register;
einer Speichereingang-Steuereinrichtung, die steuert, wann der Speicher Daten vom Feldpuffer empfängt und wann der Speicher Daten vom Prozessor empfängt; und
einem räumlichen Lichtmodulator (16) zum Empfangen der Bilddaten und zum Erzeugen einer Anzeige.

18. Verarbeitungssystem nach Anspruch 17, wobei die mehreren ersten Register (31), die mehreren zweiten Register (32) und die mehreren dritten Register (33) jeweils eine Kapazität wenigstens der Bitgröße einer Vollbildzeile von Bilddaten haben.

19. Verarbeitungssystem nach Anspruch 17, wobei die mehreren ersten Register (31) und die mehreren zweiten Register (32) eine Kapazität wenigstens der Bitgröße einer Vollbildzeile von Bilddaten haben und wobei die mehreren dritten Register (33) eine Kapazität wenigstens der Bitgröße einer Zeile einer Bitebene von Bilddaten haben.

20. Verarbeitungssystem nach irgendeinem der Ansprüche 17 bis 19, wobei die Bitwähleinrichtung (37) Bits aus dem Ausgang von den dritten Registern (33) wählt.

21. Verarbeitungssystem nach irgendeinem der Ansprüche 17 bis 19, wobei die Bitwähleinrichtung (37) Bits aus dem Eingang in die dritten Register (33) wählt.

## Revendications

1. Mémoire destinée à être utilisée dans un système d'affichage comportant un processeur (14) pour effectuer un traitement d'image et comportant un modulateur spatial de lumière (SLM) 16 pour générer une image en fonction de données d'image, comprenant :
un réseau (15, 30, 80) de mémoires pour stocker des données d'image, ledit réseau ayant une capacité d'au moins le format de bits de deux trames d'image ;
une pluralité de premiers registres (31) pour recevoir des données de pixels pour un stockage dans ledit réseau de mémoires ;
une pluralité de deuxièmes registres (32) pour transférer des données de pixels entre ledit réseau de mémoires et ledit processeur ;
une pluralité de troisièmes registres (33) pour transférer des données entre ledit réseau de mémoires et ledit SLM, après que lesdites données de pixels ont été traitées ;
un sélecteur (37) de bits pour commander lesdits troisièmes registres de telle sorte que lesdits troisièmes registres délivrent des données audit SLM ; et
un moyen de commande (25) pour commander l'adressage et la synchronisation de lecture et d'écriture dans ledit réseau de mémoires par l'intermédiaire desdits registres.

2. Mémoire selon la revendication 1, dans laquelle chaque pluralité desdits premiers registres (31), desdits deuxièmes registres (32) et desdits troisièmes registres (33), a une capacité d'au moins le format de bit d'une rangée d'une trame de données d'image.

3. Mémoire selon la revendication 1, dans laquelle chaque pluralité desdits premiers registres (31) et desdits deuxièmes registres (32) a une capacité d'au moins le format de bit d'une rangée d'une trame de données d'image, et dans laquelle ladite pluralité de troisièmes registres (33) a une capacité d'au moins le format de bit d'une rangée d'un plan de bits de données d'image.

4. Mémoire selon l'une quelconque des revendications précédentes, dans laquelle ledit sélecteur (37) de bits sélectionne des bits à la sortie desdits troisièmes registres (33).

5. Mémoire selon l'une quelconque des revendications 1 à 3, dans laquelle ledit sélecteur (37) de bits sélectionne des bits à la sortie desdits troisièmes registres (33).

6. Mémoire selon l'une quelconque des revendications précédentes, dans laquelle ledit moyen de commande (25) fournit un accès aléatoire par rangée audit réseau de mémoires.

7. Mémoire selon l'une quelconque des revendications précédentes, comprenant en outre un moyen (81) de sélection de blocs pour accéder à des parties prédéterminées de rangées dudit réseau de mémoires, et dans laquelle ledit moyen de commande comporte un moyen pour invalider une série secondaire prédéterminée de premiers registres, de telle sorte qu'ils ne reçoivent pas de données de pixels.

8. Mémoire selon l'une quelconque des revendications précédentes, comprenant en outre un moyen de commande d'entrée en mémoire pour commander le moment où lesdits premiers registres (31) reçoivent des données de pixels en provenance d'un tampon (13) de trame et le moment où lesdits premiers registres (31) reçoivent des données de pixels en provenance dudit processeur (14).

9. Mémoire selon l'une quelconque des revendications précédentes, comprenant en outre un moyen (71) de commande d'image de caractéristique spéciale pour commander le moment où ladite mémoire stocke une image de caractéristique spéciale.

10. Mémoire selon l'une quelconque des revendications précédentes, dans laquelle les premiers registres (31) sont des registres d'entrée, lesdits deuxièmes registres (32) sont des registres de sortie reliés au processeur et les troisièmes registres (33) sont des registres de sortie reliés au SLM.

11. Procédé de stockage et de traitement de données dans un système de visualisation numérique comportant un processeur (14) pour effectuer un traitement d'image et comportant un modulateur spatial de lumière (SLM) 16 pour générer une image en fonction de données d'image, comprenant les étapes suivantes :
utilisation de premiers registres (31) pour recevoir des données de pixels ;
stockage desdites données de pixels avant un traitement desdites données de pixels ;
utilisation de deuxièmes registres (32) pour délivrer lesdites données de pixels en provenance dudit réseau de mémoires, au processeur (14) ;
traitement desdites données de pixels ;
utilisation desdits premiers registres (31) pour recevoir lesdites données de pixels après traitement ;
stockage desdites données de pixels après traitement ;
sélection de bits desdites données de pixels pour formater lesdites données en données d'image ; et
utilisation de troisièmes registres (33) pour délivrer lesdites données d'image audit SLM (16).

12. Procédé selon la revendication 11, dans lequel ladite étape d'utilisation de troisièmes registres (33) est accomplie en sélectionnant des bits de même poids binaire à la sortie desdits troisièmes registres.

13. Procédé selon la revendication 11, dans lequel ladite étape d'utilisation de troisièmes registres (33) est précédée par l'étape de sélection de bits de même poids binaire à l'entrée desdits troisièmes registres.

14. Procédé selon l'une quelconque des revendications 11 à 13, dans lequel ladite étape d'utilisation dudit processeur (14) comporte l'exécution d'un algorithme de conversion de balayage.

15. Procédé selon l'une quelconque des revendications 11 à 14, dans lequel ladite étape d'utilisation dudit processeur (14) comporte l'exécution d'un algorithme de changement de format de pixel.

16. Procédé selon l'une quelconque des revendications 11 à 15, dans lequel ladite étape d'utilisation dudit processeur (14) comporte l'exécution d'un algorithme de conversion de couleur.

17. Système de traitement destiné à être utilisé dans un système d'affichage numérique comportant un modulateur spatial de lumière (SLM) 16 qui génère une image en fonction de données d'image, comprenant :
un tampon (13) de champ pour délivrer des données de pixels à une mémoire (15, 30, 80) ;
un processeur (14) pour recevoir lesdites données de pixels en provenance de ladite mémoire et pour traiter lesdites données de pixels de telle sorte qu'elles soient prêtes pour un affichage par ledit SLM ;
une mémoire (15, 30, 80) comportant un réseau de mémoires pour stocker des données d'image, ledit réseau ayant une capacité d'au moins le format de bit de deux trames d'image, une pluralité de premiers registres (31) pour recevoir des données de pixels pour un stockage dans ledit réseau de mémoires, une pluralité de deuxièmes registres (32) pour transférer des données de pixels entre ledit réseau de mémoires et ledit processeur pour un traitement, une pluralité de troisièmes registres (33) pour transférer des données entre ledit réseau de mémoires et ledit SLM, après que lesdites données de pixels ont été traitées, un sélecteur de bits pour commander lesdits troisièmes registres de telle sorte que lesdits troisièmes registres délivrent des données d'image audit SLM ;
un moyen de commande (25) pour commander l'adressage et la synchronisation de lecture et d'écriture dans ledit réseau de mémoires par l'intermédiaire desdits registres ;
un moyen de commande d'entrée en mémoire pour commander le moment où ladite mémoire reçoit des données en provenance dudit tampon de trame et le moment où ladite mémoire reçoit des données en provenance dudit processeur ; et
un modulateur spatial (16) de lumière pour recevoir lesdites données d'image et générer un affichage.

18. Système de traitement selon la revendication 17, dans lequel chaque pluralité desdits premiers registres (31), desdits deuxièmes registres (32) et desdits troisièmes registres (33), a une capacité d'au moins le format de bit d'une rangée d'une trame de données d'image.

19. Système de traitement selon la revendication 17, dans lequel chaque pluralité desdits premiers registres (31) et desdits deuxièmes registres (32) a une capacité d'au moins le format de bit d'une rangée d'une trame de données d'image, et dans lequel ladite pluralité de troisièmes registres (33) a une capacité d'au moins le format de bit d'une rangée d'un plan de mémoire de données d'image.

20. Système de traitement selon l'une quelconque des revendications 17 à 19, dans lequel ledit sélecteur (37) de bits sélectionne des bits à la sortie desdits troisièmes registres (33).

21. Système de traitement selon l'une quelconque des revendications 17 à 19, dans lequel ledit sélecteur (37) de bits sélectionne des bits à l'entrée desdits troisièmes registres (33).
